**Europäisches Patentamt**

**European Patent Office**

**Office européen des brevets**

(19)

(11) Veröffentlichungsnummer: **0 345 668 B1**

# EUROPÄISCHE PATENTSCHRIFT

(12)

(45) Veröffentlichungstag der Patentschrift: **09.12.92**

(51) Int. Cl.⁵: **C09K 3/32**

(21) Anmeldenummer: **89110050.5**

(22) Anmeldetag: **02.06.89**

(54) **Verfahren zur Beseitigung von insbesondere an ein Ufer angeschwemmtem, schwerflüchtigen Öl.**

(30) Priorität: **07.06.88 SE 8802130**

(43) Veröffentlichungstag der Anmeldung:
**13.12.89 Patentblatt 89/50**

(45) Bekanntmachung des Hinweises auf die
Patenterteilung:
**09.12.92 Patentblatt 92/50**

(84) Benannte Vertragsstaaten:
**BE DE ES FR GB IT NL**

(56) Entgegenhaltungen:
**DE-A- 1 811 131**
**DE-A- 2 520 999**
**DE-A- 3 632 337**
**US-A- 4 018 679**

(73) Patentinhaber: **YTONG AG**
**Hornstrasse 3**
**W-8000 München 40(DE)**

(72) Erfinder: **Larsson, Ingemar**
**Yxhult Mineral AB**
**S-692 02 Kumla(SE)**

(74) Vertreter: **Patentanwälte Dr. Solf & Zapf**
**Zeppelinstrasse 53**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Ein gemeinsames Merkmal verschiedener Schweröltypen ist ihre hohe Viskosität auch bei verhältnismäßig hohen Außentemperaturen. Noch bei Temperaturen von 25-35°C hat das Öl somit eine zähe oder klebrige Konsistenz, und erst nach Überschreiten dieses Temperaturbereiches wird das Öl flüssig. Dies bedeutet, daß es fast unmöglich ist, ein die Natur verschmutzendes Schweröl, beispielsweise ein infolge eines Schiffsbruchs an ein Ufer angeschwemmtes Schweröl, mit Hilfe von herkömmlichen, porösen Ölaufsaugemitteln, beispielsweise des im allgemeinen Handel unter der Bezeichnung ABSOL erhältlichen Typs, zu beseitigen. ABSOL besteht im wesentlichen aus einem Gasbeton- und/oder Schaumbetongranulat. Das Öl ist einfach zu dickflüssig und zäh, um in den Poren des Mittels aufgesaugt werden zu können.

Der vorliegenden Erfindung liegt die Aufgabe zugrunde, dieses Problem zu beseitigen und die Voraussetzungen für eine wirksame Beseitigung auch von extrem schwerflüchtigen Ölen mit Hilfe von zugänglichen Ölaufsaugemitteln poröser Art zu schaffen.

Diese Aufgabe wird erfindungsgemäß dadurch gelöst, daß dem Öl teils pulverförmiger, gebrannter Kalk und teils ein wasserenthaltendes und das Wasser wieder abgebendes Ölaufsaugemittel in Form von porösen Körnern oder Teilchen zugesetzt wird, wobei der Kalk durch Reaktion mit zumindest dem Wasserinhalt des Ölaufsaugemittels Wärme entwickelt, die die Viskosität des Öls reduziert, so daß das Öl flüssig wird und somit leichter vom Ölaufsaugemittel aufgesaugt werden kann.

Das Ölaufsaugemittel und der gebrannte Kalk können vorzugsweise unmittelbar vor dem Auftragen aufs Öl miteinander vermischt werden.

In der Praxis wird als Ölaufsaugemittel vorzugsweise zerbrochener und feinverteilter Leichtbeton, insbesondere Gasbeton und/oder Schaumbeton benutzt. Ein solcher Leichtbeton hat sowohl makroporöse als auch mikroporöse Struktur, wodurch das Öl wirksam aufgesaugt wird, vorausgesetzt daß es flüssig ist. Der Leichtbeton kann leicht zerbrochen und zu den erwünschten Korngrößenfraktionen feinzerkleinert werden, von sehr feinen Teilchen bis zu Körnern der Größenordnung 1 - 5 mm. Für den erfindungsgemäßen Zweck ist es vorteilhaft, ein Kornband feinerer Bestandteile oder Teilchen (0,001-1,0 mm) und ein Kornband größerer Bestandteile (1-5 mm) zu benutzen.

Das beschriebene Ölaufsaugemittel wird am besten mit dem pulverförmigen, gebrannten Kalk vermischt und dem verschmutzenden Öl durch Besprühung aus der Luft aufgetragen, wobei das Gemisch vorzugsweise unmittelbar vor dem Einsatz hergestellt wird. Der Kalk und der Leichtbeton können in separaten Behältern aufbewahrt und in einen gemeinsamen, beispielsweise an einem Hubschrauber montierten Tank eingeblasen oder anderswie eingebracht werden, wobei der Kalk (CaO), wenn er mit dem in unterschiedlichen Mengen und in sowohl freier als auch in gebundener Form stets im Leichtbeton vorkommenden Wasser in Berührung kommt, mit dem Wasser reagiert und dabei Wärme entwickelt. Wenn das Gemisch dann dem Öl aufgetragen wird, beispielsweise längs eines Uferabschnitts, wird das Öl vom Gemisch auf Temperaturen innerhalb des Bereiches 50-90°C erhitzt und geht dabei in einen flüssigen Zustand über, in dem es von den Poren des Leichtbetons aufgesaugt wird und dabei trockene Klumpen bildet, die leicht beseitigt werden können und sogar zurückgelassen werden können, weil die umweltschädliche Wirkung des Öls neutralisiert wird, sobald das Öl von den Leichtbetonkörnern aufgesaugt worden ist.

Wenn der gewöhnliche gebrannte Kalk (CaO) mit Wasser in Berührung gelangt, entwickelt er ziemlich rasch Wärme. Falls diese Wärmeentwicklung allzu heftig werden sollte, kann der Kalk gemäß der Erfindung mit unterschiedlichen Mengen gebrannten Dolomitkalk (CaOMgO) vermischt werden, wodurch die Wärmeentwicklung langsamer erfolgt. Durch Einregelung der Mengenverhältnisse von GaO und CaOMgO kann die Wärmeentwicklung in einer solchen Weise gesteuert werden, daß das Gemisch zum Zeitpunkt des Einsatzes die erwünschte Temperatur hat.

Der Leichtbeton oder das Ölaufsaugemittel wird mit dem Kalk in Volumenverhältnissen innerhalb des Bereichs 0,3:1 bis 1:0,3, vorzugsweise 1:1 vermischt.

Obgleich es bevorzugt wird, das Ölaufsaugemittel und den Kalk schon vor dem Auftragen aufs Öl zu vermischen, ist es an sich möglich, das Mittel in getrennten Stufen aufzutragen, und zwar in einer solchen Weise, daß der Kalk in einer ersten Stufe und das Ölaufsaugemittel in einer darauffolgenden Stufe zugesetzt wird. Dieses Verfahren ist besonders dann geeignet, wenn sich das Öl mit Wasser in Berühung befindet, beispielsweise indem das Öl an einem Ufer liegt oder Niederschlägen ausgesetzt ist, wobei der Kalk unmittelbar vor dem Auftragen des Ölaufsaugemittels mit dem in natürlicher Weise auf dem Öl vorkommenden Wasser reagiert. Falls der Kalk und der Leichtbeton vor der Bekämpfung miteinander vermischt werden, kann es zweckdienlich sein, daß man vor dem Vermischen den Leichtbeton durch Wasserbegießen feucht macht, falls der Leichtbeton durch langes Austrocknen einen extrem niedrigen Feuchtigkeitsgehalt aufweisen sollte.

**Patentansprüche**

1. Verfahren zur Beseitigung von insbesondere an ein Ufer angeschwemmtem, schwerflüchtigen Öl, dadurch **gekennzeichnet,** daß dem Öl teils pulverförmiger, gebrannter Kalk und teils ein wasserenthaltendes Ölaufsaugemittel in Form von porösen Körnern oder Teilchen zugesetzt wird, wobei der Kalk durch Reaktion mit zumindest dem Wasserinhalt des Ölaufsaugemittels Wärme entwickelt, die die Viskosität des Öls reduziert, so daß das Öl flüssig wird und somit leichter vom Ölaufsaugemittel aufgesaugt werden kann.

2. Verfahren nach Anspruch 1, dadurch **gekennzeichnet,** daß das Ölaufsaugemittel und der gebrannte Kalk vorzugsweise unmittelbar vor dem Auftragen aufs Öl miteinander vermischt werden.

3. Verfahren nach Anspruch 1 oder 2, dadurch **gekennzeichnet,** daß als Ölaufsaugemittel poröser Leichtbeton, insbesondere Gasbeton und/oder Schaumbeton, in feinverteilter Form benutzt wird.

4. Verfahren nach Anspruch 2 oder 3, dadurch **gekennzeichnet,** daß das Ölaufsaugemittel mit dem Kalk in Volumenverhältnissen von 0,3:1 bis 1:0,3, vorzugsweise 1:1, vermischt wird.

5. Verfahren nach einem der vorhergehenden Ansprüche, dadurch **gekennzeichnet,** daß dem gebrannten Kalk (CaO) pulverförmiger Dolomitkalk (CaOMgO) zur Einregelung der Temperatur bei der Berührung mit dem Öl zugesetzt wird.

6. Verfahren nach einem der vorhergehenden Ansprüche, dadurch **gekennzeichnet,** daß dem Ölaufsaugemittel vor dem Mischen oder dem Kontakt mit dem Kalk und/oder dem Dolomitkalk Wasser zugesetzt wird.

7. Verfahren nach Anspruch 1 sowie 3 bis 6, dadurch **gekennzeichnet,** daß zunächst der Kalk auf wasserenthaltendes Öl gebracht und anschließend erst das poröse Ölaufsaugemittel aufgebracht wird.

8. Verfahren nach Anspruch 1 sowie 3 bis 6, dadurch **gekennzeichnet,** daß zunächst Kalk auf das Öl aufgebracht wird, während gleichzeitig anderweitig Wasser zugeführt wird und/oder Wasser natürlichen Ursprungs zufließt und anschließend erst das poröse Ölaufsaugemittel aufgebracht wird.

9. Verfahren anch einem der Ansprüche 1 bis 8, dadurch **gekennzeichnet,** daß als Ölaufsaugemittel ein Leichtbeton, insbesondere Gas- und/oder Schaumbeton, mit einem Kornband von 0,001 bis 1 mm und einem Kornband von 1 bis 5 mm verwendet wird.

**Claims**

1. A method for removing viscous oil which has drifted on to a beach, characterised in that to the oil is added partly quicklime in powder form and partly a water-containing oil-absorbing agent in the form of porous grains or particles, whereby the lime, by reacting with at least the water content of the oil absorption agent, develops heat which reduces the viscosity of the oil so that the oil becomes fluid and thus can be absorbed more easily by the oil absorption agent.

2. A method according to Claim 1, characterised in that the oil absorption agent and the quicklime are blended one with the other preferably immediately before application to the oil.

3. A method according to Claim 1 or 2, characterised in that the oil absorption agent used is porous lightweight concrete, more particularly aerated concrete and/or aeroconcrete, in finely divided form.

4. A method according to Claim 2 or 3, characterised in that the oil absorption agent is blended with the lime in ratios by volume from 0.3:1 to 1:0.3, preferably 1:1.

5. A method according to one of the preceding Claims, characterised in that to the quicklime (CaO) is added dolomite lime (CaOMgO) in powder form in order to regulate the temperature on contact with the oil.

6. A method according to one of the preceding Claims, characterised in that water is added to the oil absorption agent before mixing or contact with the lime and/or the dolomite lime.

7. A method according to Claim 1 and 3 to 6, characterised in that firstly the lime is brought to water-containing oil and only thereafter is the porous oil absorption agent applied.

8. A method according to Claim 1 and 3 to 6, characterised in that firstly lime is brought to the oil, while at the same time other water is supplied and/or water flows in from a natural source and only thereafter is the porous oil absorption agent applied.

9. A method according to one of Claims 1 to 8, characterised in that the oil absorption agent used is a lightweight concrete, more particularly aerated and/or aero-concrete, having a grain distribution from 0.001 to 1 mm and a grain distribution from 1 to 5 mm.

**Revendications**

1. Procédé pour éliminer une huile lourde, déposée, en particulier, sur un rivage, caractérisé en ce qu'on ajoute à l'huile, pour partie, de la chaux calcinée pulvérulente, et, pour partie, un produit absorbant l'huile et contenant de l'eau, sous la forme de grains poreux ou de particules poreuses, étant entendu que la chaux, en réagissant au moins avec l'eau contenue dans le produit pour absorber l'huile, dégage de la chaleur, qui fait diminuer la viscosité de l'huile, de telle façon que l'huile devient liquide et, ainsi, peut être plus facilement absorbée par le produit pour absorber l'huile.

2. Procédé suivant la revendication 1, caractérisé en ce que le produit pour absorber l'huile et la chaux calcinée sont de préférence mélangés l'un avec l'autre, directement avant d'être déposés sur l'huile.

3. Procédé suivant la revendication 1 ou la revendication 2, caractérisé en ce que, comme produit pour absorber l'huile, on utilise du béton léger poreux, en particulier du béton-gaz et/ou du béton-mousse.

4. Procédé suivant la revendication 2 ou la revendication 3, caractérisé en ce que le produit pour absorber l'huile est mélangé à la chaux calcinée dans des rapports de volume allant de 0,3:1 jusqu'à 1:0,3, de préférence 1:1.

5. Procédé suivant l'une quelconque des revendications précédentes, caractérisé en ce que de la chaux de dolomie (CaOMgO) pulvérulente est ajoutée à la chaux calcinée (CaO) pour régler la température au moment du contact avec l'huile.

6. Procédé suivant l'une quelconque des revendications précédentes, caractérisé en ce qu au produit pour absorber l'huile, est ajoutée de l'eau avant d'être mélangé ou mis en contact avec la chaux et/ou la chaux de dolomie.

7. Procédé suivant la revendication 1 ainsi que les revendications 3 à 6, caractérisé en ce que, d'abord, la chaux est déposée sur de l'huile contenant de l'eau, puis le produit poreux pour absorber l'huile est seulement déposé ensuite.

8. Procédé suivant la revendication 1 ainsi que les revendications 3 à 6, caractérisé en ce que, d'abord, de la chaux est déposée sur l'huile contenant de l'eau, tandis qu'en même temps, de l'eau est ajoutée et/ou que de l'eau provenant d'origine naturelle s'y ajoute, et en ce que le produit poreux pour absorber l'huile est seulement déposé ensuite.

9. Procédé suivant l'une quelconque des revendications 1 à 8, caractérisé en ce que, comme produit pour absorber l'huile, on utilise un béton léger, en particulier un béton-gaz et/ou un béton-mousse, comportant un domaine de granulométrie allant de 0,001 à 1 mm et un domaine de granulométrie de 1 à 5 mm.